Europäisches Patentamt

European Patent Office

Office européen des brevets

(19)

(11) Publication number: **0 246 917 B1**

# EUROPEAN PATENT SPECIFICATION

(12)

(45) Date of publication of patent specification: **22.07.92**   (51) Int. Cl.⁵: **B01D 39/14**

(21) Application number: **87304583.5**

(22) Date of filing: **22.05.87**

(54) **High performance gas filter.**

(30) Priority: **23.05.86 JP 117497/86**
**01.07.86 JP 152642/86**
**01.07.86 JP 152643/86**

(43) Date of publication of application:
**25.11.87 Bulletin  87/48**

(45) Publication of the grant of the patent:
**22.07.92 Bulletin  92/30**

(84) Designated Contracting States:
**AT BE CH DE ES FR GB GR IT LI LU NL SE**

(56) References cited:
**EP-A- 0 055 112**
**DE-A- 2 123 316**
**DE-A- 2 940 712**
**DE-C- 1 265 555**
**DE-U- 6 912 526**

(73) Proprietor: **W.L. GORE & ASSOCIATES, INC.**
**555 Paper Mill Road P.O. Box 9329**
**Newark Delaware 19714-9206(US)**

(72) Inventor: **Oshitari, Yoshimi**
**10-8, 1-Chome Honcho**
**Tanashi-Shi Tokyo 188(JP)**

(74) Representative: **McCallum, William Potter et al**
**Cruikshank & Fairweather 19 Royal Ex-**
**change Square**
**Glasgow G1 3AE Scotland(GB)**

EP 0 246 917 B1

## Description

The present invention relates to a gas filter which is capable of providing a highly clean working atmosphere, such as is required in the production of various electronic devices in order to enhance their quality.

In the electronic, precision instrument, and pharmaceutical industries, the manufacture of products on which adhesion of dust exerts a serious adverse influence requires a high degree of dust-free atmosphere. To meet this requirement, a high performance filter paper capable of trapping particles of 0.3 $\mu$m in diameter at an efficiency of more than 99.97% has been developed. However, when the filter paper is made from fine glass fibres or chemical fibres, which is generally the case, the purity of air achieved with a filter employing the filter paper is not as high as expected from the performance of the filter paper, which it is considered should have caught almost all of the dust.

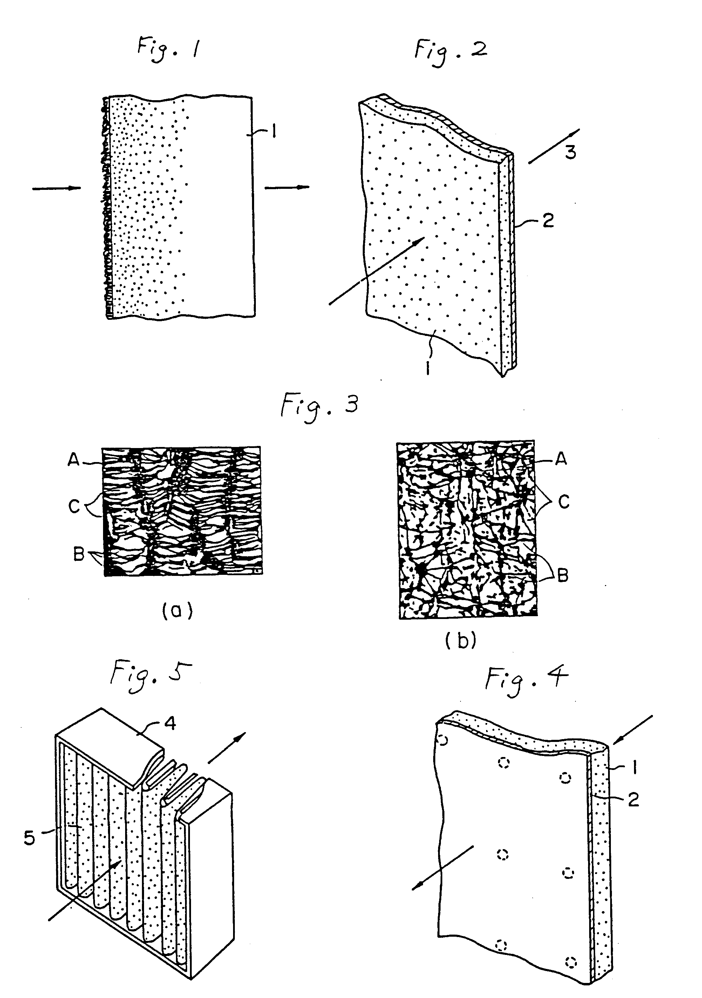

The filter paper generally has a large thickness (e.g. 400 $\mu$m) in order to increase the filtering capacity. It is considered that when the filter paper is used almost all dust which flows in is trapped between the entrance surface and a region about 200 $\mu$m deep from the entrance surface, as indicated by the dark area in the sectional view of Figure 1, so that clean air exits from the outlet surface, but in practice the atmosphere is not purified to the expected extent.

Conventionally the filter paper is produced by mixing fibres, such as glass fibres and/or chemical fibres, which have a thickness selected in accordance with the required performance, in water having an adhesive resin mixed therein, dehydrating the mixture, forming a layer and drying it. The water and adhesive resin mixture provides strength for the filter paper. However, with this method it is impossible to prevent minute fragments of fibres from being produced and mixed into the water during the course of production. In addition, since a multiplicity of fine particles are contained in the water which is used for the paper making, there are a multiplicity of fine particles contained on the surface and in the interior of the paper filter which is produced by dehydrating and drying the paper.

It is possible to fix the fine particles contained on the surface and in the interior of the paper filter on the surface of the fibres by means of the adhering action of the adhesive resin which is mixed into the water for the purpose of strengthening the filter paper. However, when the amount of adhesive resin is increased so that the adhesive strength is enhanced, the ratio of closed pores produced between the fibres increases, which also increases the pressure loss across the paper. Therefore, the amount of adhesive resin used is generally limited to a relatively small value of about 7% with respect to the weight of the filter paper. This value however is insufficient for fixing the total amount of the fine particles contained in the paper to the fibre surfaces so that many fine particles are loose in the filter paper. Accordingly, when vibration or shock is applied to the filter paper during use, such as from a blast or a pulse or air, the loose fine particles slip off the filter paper and thereby substantially lower the purity of the filtered air.

### TABLE 1

| Number of Immersions = | 1 | 2 | 3 |
|---|---|---|---|
| Particle diameter | particle count | | |
| 0.1 to 0.5 μm | 68 | 100 | 111 |
| 0.5 to 0.75 μm | 648 | 741 | 763 |
| 0.75 to 1.0 μm | 67 | 97 | 83 |
| 1.0 to 2.0 μm | 71 | 74 | 69 |
| 2.0 to 5.0 μm | 38 | 32 | 44 |
| 5.0 to 10.0 μm | 28 | 28 | 27 |
| 6.0 to 10 or more | 6 | 5 | 5 |
| Total | 926 | 1077 | 1102 |

Table 1 above shows the results of simple experiments for determining content of file particles in the filter paper. A standard high-performance filter paper having a thickness of 0.4 mm and made from glass fibres having an average diameter of about 0.4 to 0.7 μm for trapping particles having a diameter of 0.3 μm with a trapping efficiency of 99.97% was tested. The test method consisted of cutting the filter paper into sizes of 4 cm x 4 cm, and immersing them for 1 minute in 100 cc of pure water three times. The fine particles found in the pure water after each immersion were classified by diameter and the number of fine particles were counted for each classified particle diameter.

As is clear from Table 1, the fine particles contained in the filter paper were not removed by a single immersion. In fact, there was a tendency for the number of fine particles released from the filter paper to increase with the number of immersions. The first immersion totalled 926, the second immersion totalled 1077, and the third totalled 1102, and for each immersion, fine particles having a particle diameter of 0.5 to 0.75 μm were removed in the greatest numbers. The total number of fine particles released from the filter paper by the three immersions was 3105. When this is calculated in terms of a standard filter mounted within a frame with dimensions 610 mm (length) x 610 mm (width) x 150 mm (depth), representing a total surface area of 20m$^2$ and a trapping efficiency of 99.97%, the calculated total number of fine particles contained in the filter paper is 3881 x 10$^7$. Futhermore, since not all of the fine particles in the filter paper had escaped even after three immersions, the total number of fine particles contained in the filter paper may be greater than 3881 x 10$^7$. Since a small number of these particles are released due to blast or vibration, the overall performance of the filter paper is lowered.

The invention thus recognises the need to prevent the release of fine particles from high performance filter papers during use in a high performance filter for producing a substantially dust-free atmosphere. This may of course be achieved by producing a filter paper which does not contain loose fine particles, but to do this without otherwise reducing the performance of the filter is difficult. The invention therefore proposes to allow fine particles to be contained in the filter paper and to prevent them from being released during operation.

German patent specification DE 1265555 describes a multi-layer filter that has an end layer having a wetted face and a back that is provided with a non-drying adhesive. Patent specification DE 6912526 discloses a filter for dust particles and ink mist which has a rear layer of foamed plastics. Patent specification DE 2940712 describes a dust filter formed of a fleece of tangled fibres coated with a poromoric coating of polyurethanes. However, none of these specifically addresses the problems of containing fine particles originating from the filter itself.

The present invention provides a gas filter comprising a high-performance filter paper made of a fibrous material and having inlet and outlet surfaces, characterised by a fine particle checking member provided on the outlet surface of the filter paper so that they overlie each other, the fine particle checking member comprising a thin porous film having a multiplicity of pores of diameter in the range 0.01 to 15 $\mu$m so as to substantially prevent the passing of fine particles from the high-performance filter paper.

It is of course desirable that the performance of the filter should not be adversely affected in other respects, and preferably therefore the porosity of the checking member should be sufficient not to unacceptably increase the pressure drop of a gas flowing through the filter.

Preferably the thin porous film comprises a continuous porous film of expanded porous polytetrafluoroethylene (PTFE) which includes a multiplicity of minute nodes, a multiplicity of minute fibrils connecting said nodes, and a multiplicity of minute void spaces surrounded by said nodes and fibrils. Such a film can be produced having a porosity of up to 95% and a pore size as low as 0.02 um.

Porous films of other synthetic resins having pore sizes suitable for preventing the release of fine particles from the filter paper are known. However, these have a maximum porosity of about 30% and will increase the pressure drop across the filter paper so much that they are unsuitable.

Since the porous film is generally extremely thin in order to minimise pressure loss, it lacks a suitable mechanical strength. Accordingly, in superposing it onto the filter paper it may be bonded thereto with an adhesive to provide it with the desired strength. This has the advantage of simplicity, but suffers a serious drawback in that the film has a relatively smooth surface such that a considerable portion of its pores will be closed by the adhesive, resulting in a substantial reduction in porosity.

One method of overcoming this problem is to bond the porous film to the four edges of the filter paper or to mount it on a frame member before superimposing it on the filter paper. However, the mechanical strength of the unsupported portions of the film may still be unsatisfactory.

Preferably, therefore, the checking member also comprises a breathable support member to which the thin porous film is bonded at a plurality of spaced positions over its entire surface.

The support member may be a breathable paper member or a breathable reticulated fabric member, and by suitable choice of materials and dimensions the thin porous film may be reinforced by the support member to provide it with satisfactory mechanical strength but without much reduction in porosity.

Embodiments of the invention will now be described with reference to the accompanying diagrammatic drawings in which:-

Figure 1 is an enlarged sectional view of part of a high-performance filter paper, showing the way in which dust is trapped;

Figure 2 is a perspective part sectional view of the filter paper and checking member of one embodiment of a filter in accordance with the present invention;

Figures 3a and 3b are sectional views of two examples of porous film checking members;

Figure 4 shows an example of a method of overlapping and bonding together a checking member of a porous film and a filter paper;

Figure 5 is a partially broken away perspective view of a filter to which the invention can be applied;

Figure 6 shows the relationship between pressure loss and the suction time for a porous film checking member on its own and the checking member when attached to the downstream side of a high-performance filter paper;

Figure 7 shows the apparatus used for the tests measuring the pressure loss;

Figure 8 is a perspective view illustrating the construction of a second embodiment of the invention;

Figure 9 is an end view of bonding rolls for use in making the embodiment of Figure 8; and,

Figure 10 is a perspective view illustrating the construction of a third embodiment of the invention.

As previously stated, a high performance filter in accordance with the invention comprises a high performance filter paper, preferably made of glass fibres or other chemical fibres, and a fine particle checking member provided on the outlet surface of the filter paper so that they overlap each other. The fine particle checking member comprises a porous film which is capable of hindering the passing of fine particles contained in the filter paper without greatly raising the pressure loss and which has a large porosity. One form of construction is illustrated in Figure 2, in which a continuous thin porous film checking member (2) is shown placed on the air outlet surface (3) of a filter paper (1). The high-performance filter paper and checking member preferably has a trapping efficiency of 99.97%.

A preferred porous material for the checking member is made from expanded porous polytetrafluoroethylene (PTFE). This material is easy to remove dust therefrom and can satisfactorily attain the desired restriction of the release of fine particles contained in the filter paper. Expanded porous PTFE is described in U.S. Patent No. 4,187,390 and is commercially available from W.L. Gore and Associates. This material comprises a multiplicity of nodes (A), a multiplicity of fibrils (B) connecting nodes (A), and a multiplicity of long and narrow minute void spaces (C) which are surrounded by nodes (A) and fibrils (B), such as shown in the microphotographs of Figures 3(a) and 3(b). When this material is used as a filter in a dust-free room, it is possible to reduce the number of fine particles contained therein to almost zero. Furthermore, it is possible to make the material with pores from 0.02 to 15 um in diameter and, hence, it is easy to obtain pores having the diameter required for use as the checking member. It is also possible to obtain a porosity in the range of 25 to 95% as desired, it being preferred to obtain a porosity of 95% for the checking member. Table 2 lists characteristics of expanded porous PTFE.

## TABLE 2

| Characteristics | Range |
|---|---|
| Pore diameter | Necessary diameter may be obtained in the range of 0.01 to 15 $\mu$m |
| Porosity | Necessary porosity may be obtained in the range of 25 to 95% |
| Tensile strength | to 2,800 kg/m$^2$ |
| Heat resistance | -240 to +260$^\circ$C |
| Adhesion | Easily adheres without pre-processing |
| Chemical resistance | Free from attack by almost all chemicals |

Furthermore, the good adhesive properties of expanded porous PTFE enables a filter paper having a large area to be laid on top of an expanded porous PTFE membrane without having any influence on the porosity of the filter paper. Thus, bonding the membrane and filter paper together at selected spots with a space therebetween, can be achieved as shown in Figure 4, thereby facilitating production. This invention can also be applied to filters for high-temperature atmospheres by laying heat-resistant filter paper of glass fibres on top of expanded porous PTFE which has high heat resistance. Furthermore, the good chemical resistance of expanded porous PTFE will enable filtration of corrosive gases, by laying filter paper made of glass fibres or chemical fibres on top of an expanded porous PTFE membrane.

Expanded porous PTFE which is suitable for use in the present invention may be as thin as several $\mu$m and may have pores of a diameter of less than 0.1 $\mu$m. If such a film is placed on the inlet side of a filter paper (as is known for much thicker sheets in a conventional dust collector), and is used for filtering air which contains a large amount of dust, it will be clogged in a short period of time. Thus, the load capacity is small and pressure loss is greatly increased in a short period of time. Therefore, even if the filter paper itself on which the expanded porous PTFE film is laid is not clogged, the filter will become unusable as a whole after a short period of time.

As shown in Figure 1, the filter paper (1) traps dust between the upstream surface of the filter paper (1) and a region about half way through the filter paper, so that only a small amount of dust reaches the downstream side. Thus, when a checking member (2) comprised of expanded porous PTFE film is provided on the outlet surface of the filter paper (1), i.e. on its downstream side, the film need only trap a much smaller amount of fine particles contained in the filter paper and the small amount of dust which is released from the filter paper. Accordingly, when the checking member (2) is provided on the air outlet side, as shown in Figure 2, the checking member (2) becomes clogged to a much smaller extent in comparison with the filter paper, and the clogging of the checking member (2) does not have much influence on the pressure loss. Thus, the degradation of the performance of the filter paper due to the fine particles contained therein is effectively prevented.

Example

A high-performance filter paper having a thickness of 400 to 500 $\mu$m, a pressure loss of 7 mm water-gauge pressure (with respect to a suction wind speed of 5.3 cm/sec), and a trapping efficiency of 90 to 95% (with respect to the suction wind speed of 5.3 cm/sec, and particles of 0.3 um in diameter) was laid on top of an expanded porous PTFE film having a thickness of 7 um, a pressure loss of 20 mm water-gauge pressure (with respect to the suction wind speed of 5.3 cm/sec), a trapping efficiency of 99.97% (with respect to the suction wind speed of 5.3 cm/sec, and particles of 0.3 um in diameter), and pores having a maximum diameter of 0.3 um. As shown in Figure 5, the high-performance filter paper, comprised of glass fibres or other chemical fibres, together with the expanded porous PTFE film serving as a checking member, constitutes a filter member (5) having a surface area of 20 m$^2$, the filter member (5) being fixed in an undulating state into a frame (4) 610 mm in length, 610 mm in width and 150 mm in depth, which are the dimensions of a standard filter. When this filter was tested by using air dust, a trapping efficiency of 99.995% was obtained at a wind speed of 17 m$^3$ /minute. No particles which adhered to the high-performance filter paper were found to have released therefrom.

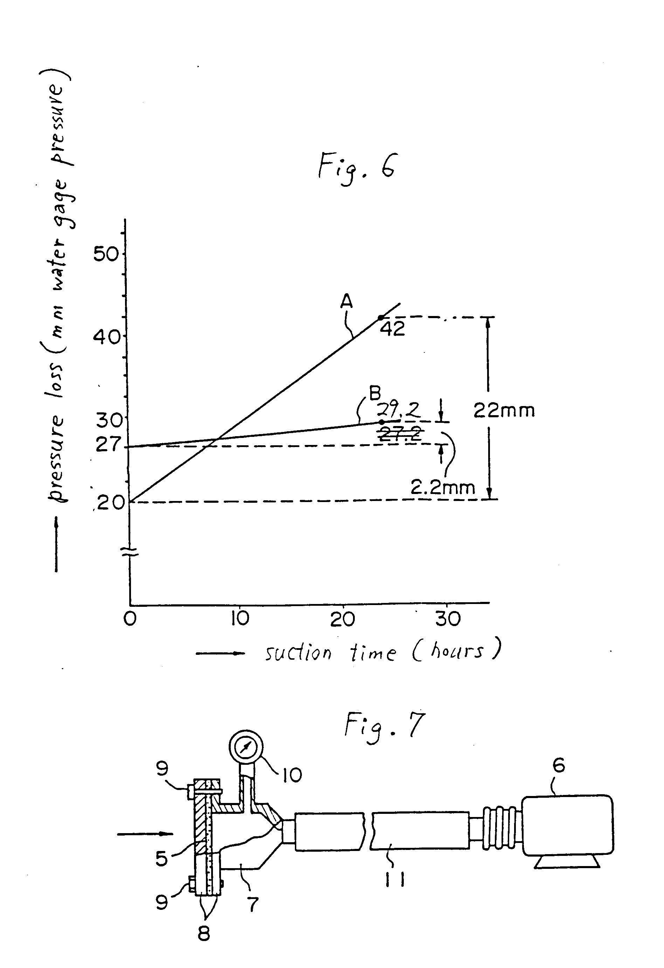

By way of comparison, a single film of expanded porous PTFE and a high-performance glass fibre filter paper backed with an expanded porous PTFE film as above were tested to determine the relationship between the pressure loss and the suction time for particles of 0.3 $\mu$m in diameter at a wind speed of 5.3 cm/sec. The results are shown in Figure 6. As can be seen, in the case of the single membrane of expanded porous PTFE, indicated by the curve A, the pressure loss of 20 mm water-gauge pressure at the start increased to a pressure loss of 42 mm water-gauge pressure after 25-hours suction, the pressure loss increasing by 22 mm water-gauge pressure. In contrast, in the case of the membrane of expanded porous PTFE backing the filter paper, indicated by the curve B, the initial pressure loss of 27 mm water-gauge pressure increased to 29.2 mm water-gauge pressure, the pressure loss thus increasing by only 2.2 mm water-gauge pressure, which is much less than that of the single membrane A. Thus, the combination of high-performance filter paper and expanded porous PTFE film in accordance with the invention can realize a practical high-performance filter free of the decrease in performance due to the release of fine particles contained in the filter paper.

The distribution of particle diameters and the concentration of the dust for each particle size distribution used in the experiments described above are shown in Table 3. The apparatus used for the experiments on the pressure loss is shown in Figure 7, the reference numeral (6) denoting a suction pump, (7) a filter paper mounting member, (8) a clamping flange, (9) a clamping screw, (10) a pressure gauge, and (11) a connecting hose.

## TABLE 3

| Particle diameter (μm) | Concentration (number/500 cc) |
|---|---|
| 0.3 to 0.4 | 15,000 |
| 0.4 to 0.45 | 7,000 |
| 0.45 to 0.5 | 3,000 |

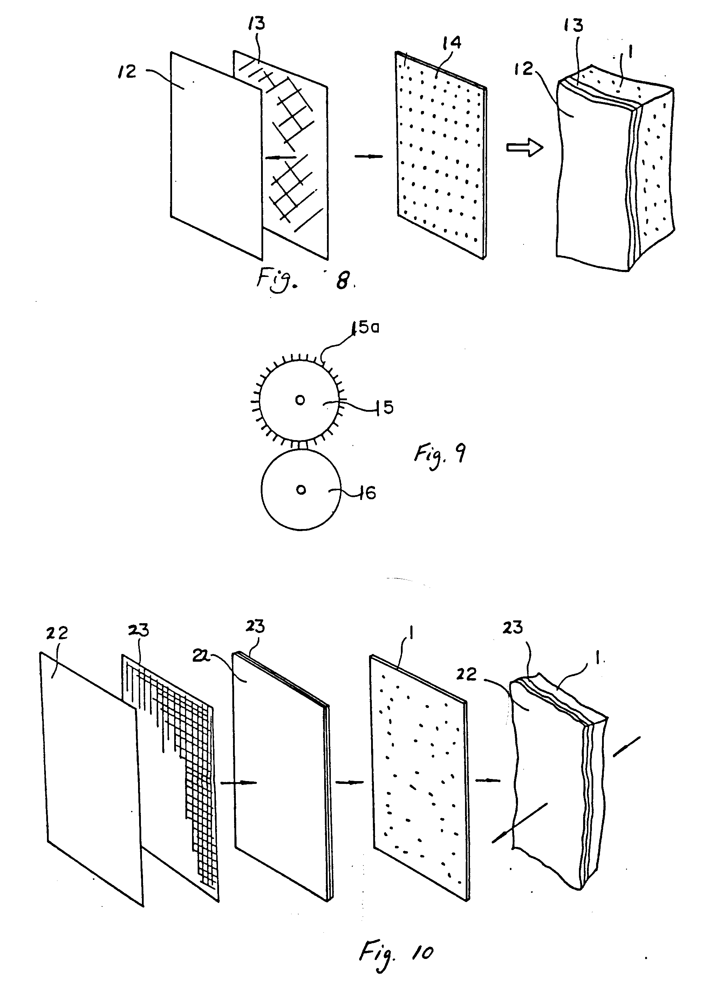

Figure 8 illustrates another embodiment of the present invention in which a breathable reinforcing paper member (13) is superposed on the entire surface of a thin porous film (12), both of which are then bonded to each other at spots (14) to form a checking member which is further superposed on a filter paper (1) or bonded thereto to form a permanent superposition.

In one example of this construction, a paper member (13) having a basis weight of from 15 to 20 g/m$^2$ and a thickness of 0.3 mm, and made from polyethylene fibres, is superposed on a polytetrafluoroethylene porous film (12) having a thickness of from 5 to 20 $\mu$m and a porosity of 95%. This assembly is then passed between rolls (15 and (16)which are shown in Figure 9 and which are heated to between 250 and 300°C. On the surface of either one of these rolls are provided a plurality of projections (15a) having a diameter of from 1 to 1.5 mm and spaced at intervals of about 5 mm, so that when an appropriate pressure is applied, the bonding of the assembly is performed at spots as indicated by the black dots (14) in Figure 8. The resulting assembly is further superposed on the downstream surface of the filter paper (1), or superposed and bonded such that the paper member (13) is facing the filter paper, this side of the filter paper (1) having had applied to it an acrylic resin aqueous emulsion. Alternatively, if the filter paper (1) is made of chemical fibres, an assembly prepared in such a manner that the paper member (13) is positioned between the filter paper (1) and the porous film (12) may be passed between the rolls (15) and (16) of Figure 9, whereby bonding is simultaneously effected between all three members.

In a case where the paper member is made of glass fibres, the entire surface of the paper member (13) may be applied, for example, with a fluorocarbon resin aqueous emulsion, dried at a temperature of about 150°C, heat treated at from 400 to 500°C, superposed on the porous film (12), and then passed between the rolls heated at from 400 to 500°C. to thereby effect the bonding. The resulting assembly is superposed on the downstream surface of the filter paper (1), and possibly bonded to the surface of the filter paper in the same way as described above.

As mentioned, the porous film (12) is bonded to the reinforcing paper member (13) at a plurality of small spots over the entire surface. If the choice of the gas permeability of the paper member (13) and of the size and number of the spots is made based on a correlation of the desired mehcanical strength, the porous film (13) can be reinforced with only a small reduction in porosity. Thus, the present embodiment gives rise to a higher mechanical strength for the checking member than that achieved when using just a thin porous film to which the four circumferential edge portions of the filter paper are bonded or a frame member is fitted. Moreover, even when bonding of the checking member to the filter paper (1) is performed, both the surfaces of the filter paper (1) and the paper member (13) to be bonded are uneven as a result of the superposition of the constituting fibres and, hence, the occurrence of pore closure by the adhesive is less, and there is no risk of a great increase in pressure loss.

It has been determined by experiments that in the case of a filter paper (13) having a basis weight of from 15 to 20 g/m$^2$ and a thickness of 0.3 mm bonded to a fluorocarbon resin porous film (12) having a porosity of 95%, the reduction in porosity is as small as only about 8%, and a mechanical strength sufficient to resist a generally employed blast pressure of 5.3 cm/sec is obtained. Thus, if such an assembly is superposed on a filter paper, it is possible to obtain a high-performance filter paper which has sufficient mechanical strength and which suffers no drop in performance due to dust generation.

Figure 10 illustrates an alternative embodiment to that of Figure 8, wherein a reticulated fabric member (23) is used instead of the paper member and is bonded to the surface of a thin porous film (22), followed by superposing the checking member assembly so formed onto a filter paper (1). In the case where the assembly is permanently superposed on the filter paper by bonding, the surface of the reticulated fabric member (23) is bonded to the downstream surface of the filter paper, but when the assembly is merely superposed on the filter paper, either the porous film (22) or the reticulated fabric member (23) may face the surface of the filter paper (1).

In a specific example of this construction, a reticulated fabric member (23) made of polyethylene fibres and having a lineal diameter of 0.3 mm and a mesh size of 5 mm x 5 mm, is superposed on a porous film (22) which may be similar to the film (12) described earlier. The assembly is passed between rolls heated to between 250 and 300°C while applying an appropriate pressure to effect bonding while utilizing the thermoplasticity of the porous film (22) and the reticulated fabric member (23). The resulting assembly is further superposed on the downstream surface of the filter paper (1), or superposed and bonded with the reticulated fabric member (23) facing the filter paper, on which an acrylic resin aqueous emulsion has been applied to effect the bonding and hence permanent superposition.

Further, in a case where the reticulated fabric member (23) is made of glass fibres and the porous film is made of a fluorocarbon resin, the entire surface of the reticulated fabric member (23) may be applied with a fluorocarbon resin aqueous emulsion, dried at a temperature of about 150°C, heat treated at from 400 to 500°C, superposed on the porous film (22), and then passed between the rolls heated at from 400 to 500°C, to thereby effect bonding. The resulting assembly is superposed on the downstream surface of the filter paper (1), and possibly bonded to the surface in the same way as that described above.

The porous film (22) is bonded to the reticulated fabric member (23) only in the narrow lineal portions of the mesh connected to each other. Accordingly, by the choice of the lineal diameter and the mesh size of the reticulated fabric member (23), the porous film (22) can be reinforced at the expense of only a small reduction in porosity. Thus, this embodiment has similar advantages to those described earlier in relation to the second embodiment illustrated in Figure 8.

It has been determined by experiments that in the case of a reticulated member having a lineal diameter of 0.3 mm and a mesh size of 5 mm x 5 mm as described above bonded to a fluorocarbon resin porous film having a porosity of 95%, the reduction in porosity may be only from 10 to 15%, and a mechanical strength sufficient to resist a blast pressure of 5.3 cm/sec is obtained. Thus, if such an assembly is superposed on a filter paper, it is possible to obtain a high-performance filter paper having a satisfactory mechanical strength and suffering no reduction in performance due to dust generation.

Also, since fluorocarbon resin porous films have a high melting point, if the filter paper is made from glass fibres which have been processed with a high temperature-resistant fluorocarbon resin or polyimide resin and the fluorocarbon resin porous film is bonded thereto via the reticulated fabric member, it is possible to prepare a high temperature-use filter paper which can be used up to about 350°C and which is free from dust generation.

**Claims**

1. A gas filter comprising a filter paper (1) made of a fibrous material and having inlet and outlet surfaces, characterised by a fine particle checking member provided on the outlet surface (3) of the filter paper (1) so that they overlie each other, the fine particle checking member comprising a thin porous film (2;12;22) having a multiplicity of pores of diameter in the range 0.01 to 15 µm so as to substantially prevent the passing of fine particles from the high-performance filter paper.

2. A gas filter according to claim 1, wherein the filter paper (1) is comprised of glass fibres.

3. A gas filter according to claim 1, wherein the filter paper (1) is comprised of chemical fibres.

4. A gas filter according to any one of claims 1 to 3, wherein said thin porous film (2;12;22) is a continuous porous film of expanded porous polytetrafluoroethylene (PTFE) which includes a multiplicity of minute nodes, a multiplicity of minute fibrils connecting said nodes, and a multiplicity of minute void spaces surrounded by said nodes and fibrils.

5. A gas filter according to claim 4, wherein the maximum dimensions of the void spaces are not more than 0.3 µm.

6. A gas filter according to claim 4, wherein the porosity of the expanded porous PTFE film is up to 95%.

7. A gas filter according to any one of the preceding claims, wherein the checking member also comprises a breathable support member (13;23) to which the thin porous film (12;22) is bonded at a plurality of spaced positions (14) over its entire surface.

8. A gas filter according to claim 7, wherein the checking member is provided on the outlet surface of the filter paper (1) with the support member (13;23) facing the filter paper.

9. A gas filter according to claim 8, wherein the checking member is bonded to the filter paper (1).

10. A gas filter according to any one of claims 7 to 9, wherein the support member is a breathable paper member (13).

11. A gas filter according to any one of claims 7 to 9, wherein the support member is a breathable reticulated fabric member (23).

12. A gas filter according to any one of claims 7 to 11, wherein the support member (13;23) and the thin film (12;23) are of plastics and are bonded by application of heat and pressure at said spaced positions (14).

13. A gas filter according to claim 1 for filtering air, wherein the entire surface of said porous film to check the dust generation is spot bonded to a breathable paper member and then superposed on said filter paper.

14. A gas filter according to claim 1 for filtering air, wherein the entire surface of said porous film to check the dust generation is spot bonded to a breathable reticulated fabric member and then superposed on said filter paper.

**Revendications**

8

1. Filtre à gaz comprenant un papier filtre (1) constitué d'un matériau fibreux et comportant des surfaces d'entrée et de sortie, caractérisé par un élément de contrôle des particules fines prévu sur la surface de sortie (3) du papier filtre (1) de sorte qu'ils se superposent l'un l'autre, l'élément de contrôle des particules fines comprenant un mince film poreux (2; 12; 22) comportant une multiplicité de pores de diamètre dans le domaine de 0,01 à 15 $\mu$m de façon à empêcher essentiellement le passage des particules fines issues du papier filtre à haute performance.

2. Filtre à gaz selon la revendication 1, dans lequel le papier filtre (1) est composé de fibres de verre.

3. Filtre à gaz selon la revendication 1, dans lequel le papier filtre (1) est composé de fibres chimiques.

4. Filtre à gaz selon l'une quelconque des revendications 1 à 3 dans lequel ledit mince film poreux (2 ; 12; 22) est un film, poreux continu de polytétrafluoroéthylène poreux expansé (PTFE) qui inclut une multiplicité de noeuds minuscules, une multiplicité de fibrilles minuscules reliant lesdits noeuds, et une multiplicité de minuscules espaces vides entourés par lesdits noeuds et fibrilles.

5. Filtre à gaz selon la revendication 4, dans lequel les dimensions maximales des espaces de vide ne sont pas supérieures à 0,3 $\mu$m.

6. Filtre à gaz selon la revendication 4, dans lequel la porosité du film de PTFE poreux expansé va jusqu'à 95%.

7. Filtre à gaz selon l'une quelconque des revendications précédentes, dans lequel l'élément de contrôle comprend aussi un élément support resoirateur (13 ; 23) auquel le mince film poreux (12 ; 22) est lié au niveau d'une pluralité de positions espacées (14) sur toute sa surface.

8. Filtre à gaz selon la revendication 7, dans lequel l'élément de contrôle est prévu sur la surface de sortie du papier filtre (1), l'élément support (13, 23) faisant face au papier filtre.

9. Filtre à gaz selon la revendication 8, dans lequel l'élément de contrôle est lié au papier filtre (1).

10. Filtre à gaz selon l'une quelconque des revendications 7 à 9, dans lequel l'élément support est un élément de papier respirateur (13).

11. Filtre à gaz selon l'une quelconque des revendications 7 à 9, dans lequel l'élément support est un élément de tissu réticulé respirateur.

12. Filtre à gaz selon l'une quelconque des revendications 7 à 11, dans lequel l'élément support (13, 23) et le film mince (12, 23) sont des matières plastiques et sont liés par application de chaleur et de pression auxdites positions espacées (14).

13. Filtre à gaz selon la revendication 1 pour filtrer l'air, dans lequel toute la surface dudit film poreux pour contrôler la formation de poussière est liée par points à un élément papier resoirateur et ensuite superposée sur ledit papier filtre.

14. Filtre à gaz selon la revendication 1 pour filtrer l'air, dans lequel toute la surface dudit film poreux pour contrôler la formation de poussière est liée par points à un élément en tissu réticulé respirateur et ensuite superposée sur ledit papier filtre.

**Patentansprüche**

1. Gasfilter, umfassend: ein aus einem Faserstoff hergestelltes Filterpapier (1) mit Eintritts- und Austrittsfläche, **gekennzeichnet** durch ein Feinteilchen-Sperrelement, das an der Austrittsseite (3) des Filterpapiers (1) derart vorgesehen ist, daß sie übereinanderliegen, wobei das Feinteilchen-Sperrelement einen dünnen porösen Film (2; 12; 22) mit einer Vielzahl von Poren mit einem Durchmesser im Bereich von 0,01 - 15 Mikrometer aufweist, so daß ein Durchlassen von Feinteilen aus dem Hochleistungs-Filterpapier im wesentlichen verhindert wird.

**2.** Gasfilter nach Anspruch 1, bei dem das Filterpapier (1) aus Glasfasern besteht.

**3.** Gasfilter nach Anspruch 1, bei dem das Filterpapier (1) aus chemischen Fasern besteht.

**4.** Gasfilter nach einem der Ansprüche 1 - 3, bei dem der dünne poröse Film (2; 12; 22) ein durchgehender Film aus expandiertem, porösem Polytetraflourethylen (PTFE) ist, der eine Vielzahl kleiner Knötchen, eine Vielzahl kleiner, die Knötchen verbindender Fibrillen und eine Mehrzahl von kleinen, von den Knötchen und den Fibrillen umgebener Leerräumen enthält.

**5.** Gasfilter nach Anspruch 4, bei dem die maximalen Abmessungen der Leerräume nicht mehr als 0,3 Mikrometer betragen.

**6.** Gasfilter nach Anspruch 4, bei dem die Porösität des expandierten, porösen PTFE-Films bis zu 95% beträgt.

**7.** Gasfilter nach einem der vorhergehenden Ansprüche, bei dem das Sperrelement außerdem ein atemfähiges Trageelement (13; 23) aufweist, mit dem der dünne poröse Film (12; 22) an mehreren beabstandeten Stellen (14) an seiner gesamten Oberfläche verbunden ist.

**8.** Gasfilter nach Anspruch 7, bei dem das Sperrelement an der Auslaßseite des Filterpapiers (1) vorgesehen ist, wobei das Trägerelement (13; 23) dem Filterpapier zugewandt ist.

**9.** Gasfilter nach Anspruch 8, bei dem das Sperrelement an dem Filterpapier (1) fixiert ist.

**10.** Gasfilter nach einem der Ansprüche 7 - 9, bei dem das Trägerelement ein atmungsfähiges Papierelement (13) ist.

**11.** Gasfilter nach einem der Ansprüche 7 - 9, bei dem das Trägerelement ein atmungsfähiges, netzartiges Stoffelement (23) ist.

**12.** Gasfilter nach einem der Ansprüche 7 - 11, bei dem das Trägerelement (13; 23) und der dünne Film (12; 23) aus Kunststoff bestehen und durch Aufbringung von Wärme und Druck an den beabstandeten Stellen (14) miteinander verbunden sind.

**13.** Gasfilter nach Anspruch 1 zum Filtern von Luft, bei dem die gesamte Fläche des porösen Films zum Abhalten der Stauberzeugung punktweise mit einem atmungsfähigen Papierelement verbunden und dann über das Filterpapier gelegt ist.

**14.** Gasfilter nach Anspruch 1 zum Filtern von Luft, bei dem die gesamte Fläche des porösen Films zum Abhalten der Stauberzeugung punktweise mit einem atmungsfähigen netzartigen Stoffelement verbunden und dann über das Filterpapier gelegt ist.

10

Fig. 1

Fig. 2

Fig. 3

(a)

(b)

Fig. 5

Fig. 4

## Fig. 6

## Fig. 7

Fig. 8.

Fig. 9

Fig. 10